# FASCICULE DE BREVET EUROPEEN

(11) **EP 2 181 628 B1**
(45) Date de publication et mention de la délivrance du brevet: **15.06.2011**
(21) Numéro de dépôt: 09174807.9
(22) Date de dépôt: 02.11.2009
(51) Int. Cl.: A47J 19/02

(54) **Appareil de traitement alimentaire, de type presse-agrumes ou centrifugeuse**
Gerät zur Lebensmittelverarbeitung vom Typ Zitruspresse oder Zentrifuge
Food-processing device, such as a citrus press or juice extractor

(30) Priorité: 03.11.2008 FR 0857457
(43) Date de publication de la demande: 05.05.2010
(73) Titulaire: SANTOS, 69120 Vaulx en Velin (FR)
(72) Inventeur: Fouquet, Nicolas, André, 69680 Chassieu (FR)
(74) Mandataire: Schouller, Jean-Philippe

(56) Documents cités:
- FR-A- 2 649 878
- GB-A- 2 249 037
- GB-A- 2 275 415
- US-A- 4 157 062
- US-A- 5 445 069

## Description

La présente invention concerne un appareil de traitement alimentaire du type presse-agrumes ou centrifugeuse.

Ce type d'appareil de traitement alimentaire comprend généralement un bâti, lequel supporte des moyens moteurs qui possèdent entre autres un axe rotatif. En service, cet axe entraîne un outil actif de traitement des aliments. Dans le cas où l'appareil est un presse-agrumes, cet outil est une ogive, contre laquelle se trouve pressé le fruit, généralement coupé en deux. Par ailleurs, dans le cas d'une centrifugeuse, cet outil actif est en général une râpe, contre laquelle est repoussé le produit alimentaire, en vue de son déchiquetage.

On connait tout d'abord des presse-agrumes pour lesquels la mise en rotation de l'ogive s'opère de façon continue. Cette solution est cependant peu commode, dans la mesure où l'opération de pressage ne se révèle pas simple à mettre en oeuvre. De plus, elle peut dans certains cas s'avérer dangereuse pour l'opérateur.

Afin de remédier à ce problème, on a également réalisé des presse-agrumes dans lesquels la mise en rotation de l'ogive est initiée de façon électrique. De façon plus précise, lorsque le fruit se trouve pressé, la force ainsi mise en oeuvre contribue à fermer un contact électrique, ce qui permet la mise en route du moteur.

Dans le cas où le presse-agrumes est pourvu d'un levier, permettant de repousser le fruit contre l'ogive, ce contact est le plus souvent placé sur le levier proprement dit. Il existe également d'autres types de presse-agrumes, le plus souvent « à main ». Ce contact est alors disposé selon un mouvement de course en translation de l'ogive ou de son axe.

Ce type de presse-agrumes, faisant intervenir un contact électrique, s'accompagne cependant d'inconvénients spécifiques. En effet, cette mise en route électrique nécessite d'utiliser un moteur à fort couple de démarrage. De plus, cette solution s'accompagne de démarrages et d'arrêts fréquents du moteur, en particulier lors d'un usage intensif. Par conséquent, ceci induit une réduction de la durée de vie de l'appareil, le nombre de cycles des composants électriques étant par nature limité.

Par ailleurs, lors de la mise en route électrique du moteur, une rampe d'accélération est nécessaire avant d'atteindre la vitesse de pressage nominale. De la même façon, on observe une rampe de décélération immédiatement après l'arrêt du moteur. On conçoit aisément que ceci est de nature à ralentir l'opération de pressage, ce qui est désavantageux sur un plan économique, dans un cadre industriel. De plus, du fait de l'inertie des différentes pièces, il existe une période de latence durant laquelle l'ogive n'est pas en position arrêtée, ce qui peut provoquer des éclaboussures, ainsi qu'un inconfort, voire un danger pour l'opérateur.

Afin de remédier aux inconvénients de cette solution alternative, la, Demanderesse a proposé un presse-agrumes de type débrayable, commercialisé sous la référence N°' 10 et décrit dans FR- A-2 659 878 sur lequel est basé le préambule de la revendication 1. Cet appareil fait appel à un moteur fonctionnant en continu, qui n'entraîne cependant l'ogive que lorsqu'une force de pressage est appliquée sur cette dernière.

A cet effet, il est prévu un organe intermédiaire propre à être entrainé par le moteur de façon sélective, de sorte que cet organe possède une position inactive de repos, ainsi qu'une position active d'entraînement. Le passage de la position de repos à la position d'entraînement s'opère lorsque s'exerce une force de pressage sur l'ogive, alors que des moyens de rappel élastiques tendent à ramener l'organe intermédiaire dans sa position de repos, quand cette force n'est plus exercée.

De façon plus précise, cet organe d'entraînement se présente sous forme d'un arbre solidaire de l'ogive, qui est monté dans un flasque solidaire du bâti, avec l'interposition de coussinets. Cet arbre est prolongé par une plaque, propre à prendre appui contre un plateau tournant appartenant aux moyens moteurs, lorsque l'effort de pressage est exercé. Dans ces conditions, l'arbre d'entraînement est mis en mouvement, ce qui contribue à faire tourner l'ogive. De plus, lorsque cet effort est relâché, un ressort de rappel repousse la plaque contre le flasque solidaire du bâti, ce qui provoque un arrêt de l'arbre d'entraînement, ainsi que de l'ogive.

Cette dernière solution présente de nombreux avantages, qui ont conduit à un succès commercial significatif pendant bon nombre d'années. Cependant, on a observé que cet appareil N° 10 présente une durée de vie relativement peu élevée, et qu'il nécessite un renouvellement relativement fréquent de certains de ses éléments constitutifs. De plus, un tel appareil fait appel à un nombre assez conséquent de composants.

Ceci étant précisé, l'invention vise à remédier aux différents inconvénients de l'art antérieur évoqués ci-dessus.

A cet effet, elle a pour objet un appareil de traitement alimentaire, en particulier presse-agrumes ou centrifugeuse, comprenant un bâti, des moyens moteurs pourvus d'un axe moteur rotatif, un outil actif de traitement, en particulier une ogive de pressage du presse-agrumes ou une râpe de déchiquetage de la centrifugeuse, cet appareil comprenant en outre un arbre d'entraînement propre à être mis en mouvement par l'axe moteur de façon à entraîner l'outil actif, cet arbre d'entraînement possédant une position de repos et une position active, dans laquelle il est mis en mouvement, cet arbre d'entraînement étant propre à passer de sa position de repos vers sa position active sous l'effet d'une force exercée par l'utilisateur, alors qu'il est prévu des moyens de rappel de cet arbre d'entraînement vers sa position de repos, caractérisé en ce que cet arbre d'entraînement est un arbre creux qui définit un logement recevant au moins en partie l'axe rotatif, cet axe rotatif étant propre à tourner librement dans ce logement dans la position de repos de l'arbre d'entraînement.

Selon d'autres caractéristiques :
- le logement est borgne au niveau d'un sommet de l'arbre d'entraînement, en étant débouchant à l'opposé de ce sommet.
- le rapport entre la hauteur du logement et la dimension transversale, notamment le diamètre, de l'axe moteur est compris entre 1 et 10, de préférence entre 4 et 8, en particulier voisin de 6, cette hauteur étant calculée en référence au débouché du logement et cette dimension transversale étant calculée dans la région de l'axe située au voisinage de ce débouché.
- l'arbre d'entraînement est prolongé par une collerette qui est pourvue de premiers et seconds éléments de friction, propres à coopérer respectivement avec un premier organe complémentaire solidaire du bâti et avec un second organe complémentaire solidaire des moyens moteurs.

- les parois périphériques de l'axe moteur s'étendent directement au voisinage des parois en regard du logement, sans interposition d'une pièce intermédiaire entre cet axe et l'arbre d'entraînement.
- l'axe rotatif moteur présente une cavité, adjacente au sommet de l'arbre d'entraînement , les moyens de rappel comprenant un ressort logé dans cette cavité.
- un élément intermédiaire est interposé entre les parois en regard de l'axe rotatif et de l'arbre d'entraînement, cet élément intermédiaire présentant un degré de liberté en translation par rapport à l'axe rotatif dans ladite position de repos, selon la direction principale de ce dernier, tout en étant lié en rotation par rapport à ce dernier, cet élément intermédiaire présentant en outre un degré de liberté en rotation par rapport à l'arbre d'entraînement dans ladite position de repos, selon la direction principale de ce dernier, tout en étant lié en translation à ce dernier.
- des éléments de roulement, notamment de type roulement à billes, à rouleaux ou à aiguilles, sont interposés entre les parois en regard de l'arbre d'entraînement et de l'organe intermédiaire.
- les moyens de rappel comprennent un ressort hélicoïdal interposé entre les parois en regard de l'organe intermédiaire et des moyens moteurs.

L'invention va être décrite ci-après, en référence aux dessins annexés, donnés uniquement à titre d'exemples non limitatifs, dans lesquels :
- la figure 1 est une vue en perspective, illustrant un appareil de traitement alimentaire conforme à l'invention ;
- la figure 2 est une vue en perspective, illustrant sous un autre angle une ogive appartenant à cet appareil ;
- les figures 3 et 4 sont des vues en perspective avec arrachement, illustrant un appareil conforme à un premier mode de réalisation de l'invention, respectivement au repos et en fonctionnement ; et
- les figures 5 et 6 sont des vues en perspective avec arrachement, analogues aux figures 3 et 4, illustrant un appareil conforme à un second mode de réalisation de l'invention, au repos et en fonctionnement.

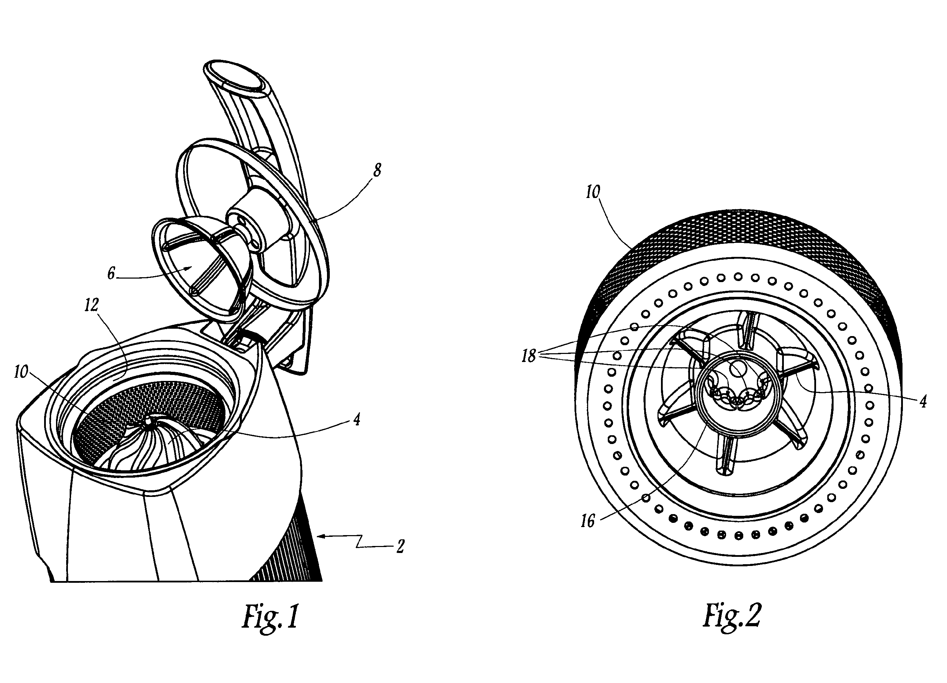

La figure 1 illustre un appareil de traitement alimentaire conforme à l'invention, qui est en l'occurrence un presse-agrumes. Ce dernier comprend tout d'abord, de manière connue en soi, un bâti 2, qui supporte des moyens moteurs non représentés sur cette figure.

On retrouve en outre une ogive 4, formant un outil de traitement au sens de l'invention, qui est destinée à recevoir un agrume coupé en deux. Cette ogive 4 est associée à une coupelle 6, destinée à coiffer la surface extérieure de cet agrume, ainsi qu'à un levier 8 propre à repousser la coupelle en direction de l'ogive en vue du pressage de l'agrume.

De façon classique, l'ogive 4 est entourée par un panier percé 10, qui est lui-même reçu dans une cuve périphérique 12, pourvue d'un embout de distribution non représenté. Ainsi, en service, l'utilisateur place un récipient immédiatement au dessous de cet embout, de manière à recueillir le jus de l'agrume.

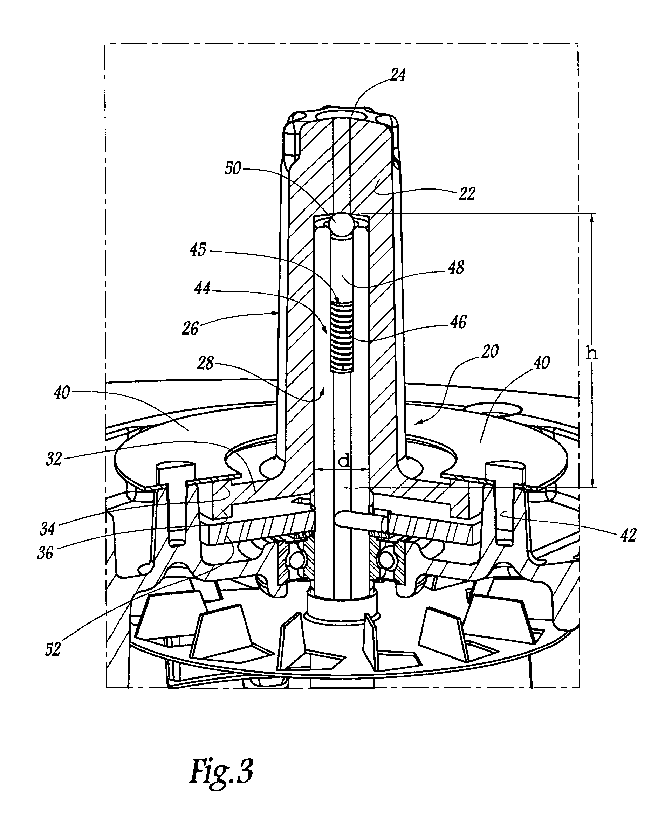

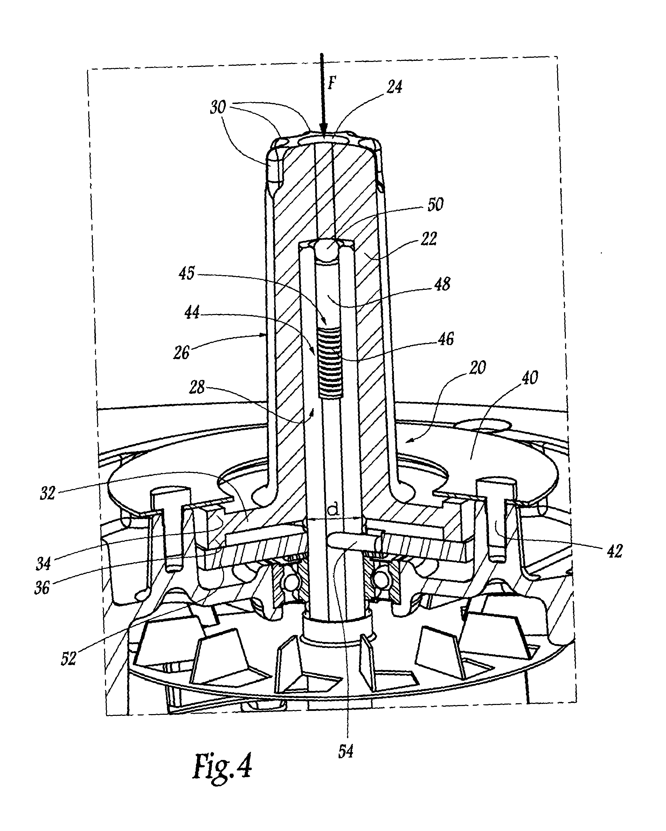

De plus, comme le montre la figure 2, le socle de l'ogive 4 définit un fût 16 dans lequel sont formés des crans 18, destinés à coopérer avec un organe d'entraînement 20. En référence aux figures 3 et 4, ce dernier comprend tout d'abord une partie principale 22, formant un arbre. On notera que, conformément à l'invention, cet arbre 22 est creux, à savoir qu'il possède un sommet 24 fermé, à partir duquel s'étendent des parois 26, de section cylindrique.

Ces parois délimitent un logement 28, qui est borgne en direction du sommet fermé 24, mais débouche à l'opposé de ce dernier. Ce logement s'étend sur une partie substantielle de la hauteur de l'arbre d'entraînement 22. Si on note h la hauteur du logement, définie en partie basse par le débouché de ce logement, et d la dimension transversale, en l'occurrence le diamètre, de l'axe moteur 44 dans la zone de celui-ci placé en regard de ce débouché, le rapport h/d est avantageusement compris entre 1 et 10, de préférence entre 4 et 8, notamment voisin de 6. Le sommet 24, qui est destiné à s'emmancher dans le fût 16, est pourvu de crans 30 propres à coopérer avec les crans 18 de l'ogive 4, afin d'assurer la solidarisation mutuelle entre cette ogive et cet arbre 22.

L'arbre 22 est prolongé, à l'opposé du sommet 24, par une collerette 32, laquelle possède deux rebords périphériques. L'un 34 de ces rebords est dit « supérieur », car il s'étend en direction du sommet 24, alors que l'autre rebord 36 est dit « inférieur », puisqu'il s'étend à l'opposé.

Par ailleurs, le bâti 2 supporte une plaque annulaire 40, solidarisée sur ce bâti par l'intermédiaire de vis 42. Cette plaque 40, qui est disposée à la périphérie de l'arbre 22, présente une paroi inférieure adjacente au rebord supérieur 34 de la collerette 32. Comme on le verra plus en détail dans ce qui suit, ceci permet le freinage de l'organe d'entraînement.

Les moyens moteurs comprennent tout d'abord un bobinage classique, qui n'est pas représenté, lequel entraine en rotation un axe 44, coaxial à l'arbre 22. On notera que, conformément à l'invention, cet axe moteur 44 est reçu en partie dans le logement 28, défini par l'arbre creux 22. De plus, cet axe et cet arbre sont coaxiaux, à savoir qu'ils présentent une même direction principale.

Entre l'arbre 22 et l'axe 44, il existe à la fois un degré de liberté en translation selon leur direction principale, ainsi qu'un degré de liberté en rotation autour de cette même direction. L'axe 44 présente une cavité 45 dans sa partie supérieure, voisine du sommet 24, de manière à recevoir un ressort de rappel 46. Ce dernier supporte un cylindre d'usure 48, lui-même surmonté d'une bille d'appui 50, propre à frotter contre les parois en regard du sommet 24 de l'arbre 22.

Enfin, l'axe 44 supporte un plateau 52, entraîné en rotation solidairement de cet axe moteur 44, grâce à la présence de goupilles 54. Ce plateau 52 et la plaque 40, décrits ci-dessus, sont placés de part et d'autre des rebords 34 et 36 de la collerette 32.

Dans la position de repos, illustrée sur la figure 3, aucune force n'est exercée sur l'ogive, en direction de l'arbre. Par conséquent, le ressort 46 tend à repousser cet arbre vers le haut, via le cylindre 48 et la bille 50. Dans ces conditions, le rebord supérieur 34 de la collerette 32 prend appui contre la plaque 40 solidaire du bâti.

Par conséquent, l'arbre se trouve également solidaire du bâti, de sorte que l'axe 44 pivote librement à l'intérieur du logement 28. On rappellera que, de façon avantageuse, cet axe 44 est mis en mouvement de manière continue, ce qui évite les inconvénients liés aux arrêts et redémarrage successifs. Dans ce premier mode de réalisation, l'axe moteur 44 tourne librement au voisinage des parois intérieures de l'arbre creux 22, sans interposition d'une pièce intercalaire.

Lors d'une phase de fonctionnement, l'utilisateur place un agrume contre l'ogive 4, puis repousse le levier 8 vers le bas. Ceci génère donc une force notée F sur la figure 4, qui est dirigée selon l'axe principal de l'arbre 22 et de l'axe 44, à savoir sensiblement vers le bas. Ceci contribue à repousser l'arbre 22 en direction de l'axe 44, à l'encontre du ressort 46.

Au terme de ce mouvement, le rebord inférieur 36 de la collerette 32 prend appui contre le plateau 52, monté sur les moyens moteurs. Dans ces conditions, la collerette 32 et, par conséquent, l'arbre 22 sont désormais entrainés en rotation par l'axe moteur 44. Ceci conduit alors à la mise en mouvement de l'ogive 4 et au pressage de l'agrume.

Dès que la force F n'est plus exercée, le ressort 46 tend à repousser à nouveau l'arbre 22 à l'opposé de l'axe 44. Ce mouvement se poursuit jusqu'à la venue en butée du rebord supérieur 34 de la collerette 32 contre la plaque fixe 40, de sorte qu'on se trouve à nouveau dans la position de repos décrite en référence à la figure3.

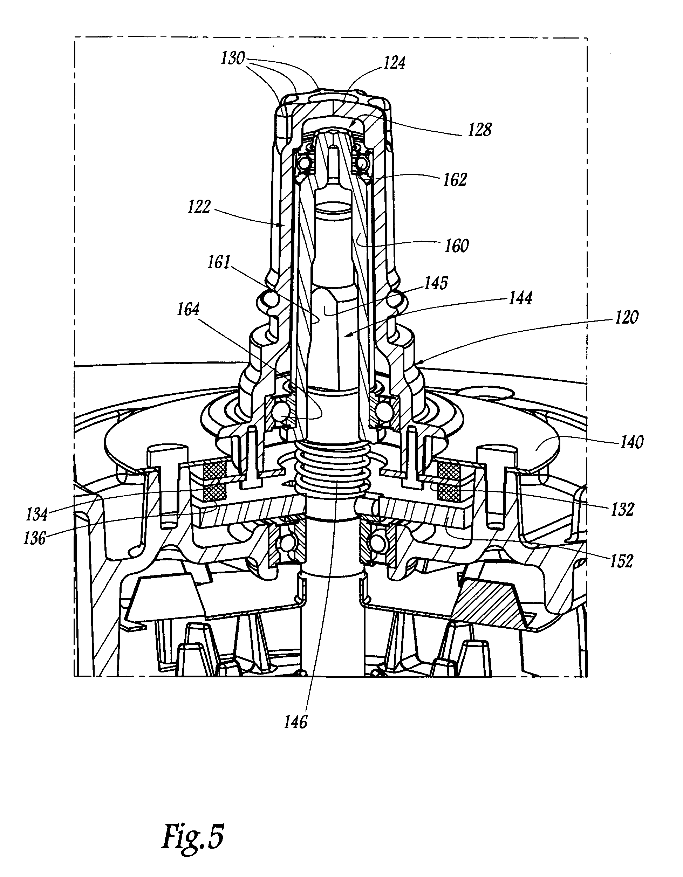

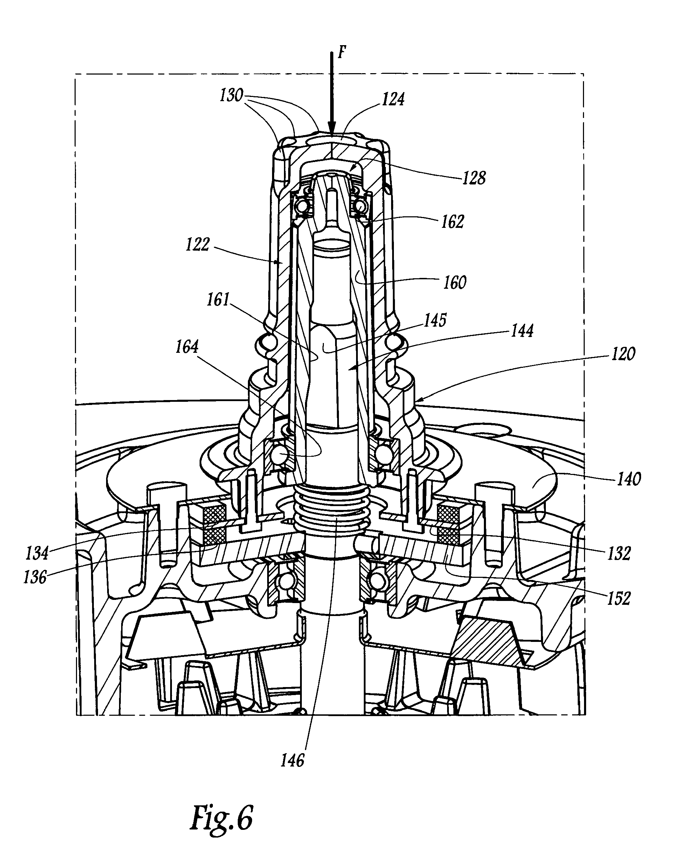

Les figures 5 et 6 illustrent un second mode de réalisation de l'invention. Sur ces figures, les éléments mécaniques analogues à ceux des figures 3 et 4 y sont affectés des mêmes numéros de référence, augmentés de 100.

Ce second mode de réalisation diffère de celui présenté aux figures 3 et 4, notamment en ce qu'il est prévu une pièce intermédiaire 160, formant coulisseau, intercalée entre l'arbre d'entraînement 122 et l'axe moteur 144. Ce coulisseau 160 est lié en rotation avec l'axe moteur 144, tout en présentant un degré de liberté en translation par rapport à cet axe, selon la direction principale de ce dernier. A cet effet, l'axe 144, globalement cylindrique, est tronqué par des méplats 145, coopérant avec des méplats en regard 161, ménagés sur la face intérieure du coulisseau 160.

De plus, ce coulisseau 160 est lié en translation par rapport à l'arbre 122, tout en présentant un degré de liberté en rotation par rapport à cet arbre, autour de la direction principale de ce dernier. A cet effet, deux jeux de roulements à billes 162 et 164 sont interposés entre les parois en regard du coulisseau et de l'arbre, respectivement en parties haute et basse de ces derniers.

De plus, il est prévu un ressort hélicoïdal 146 s'étendant à la périphérie extérieure de l'axe moteur 144. Les extrémités axiales de ce ressort 146 sont interposées entre les parois en regard du coulisseau 160 et du plateau 152 solidaire du moteur.

Enfin, dans ce second mode de réalisation, les rebords 34 et 36 sont remplacés par des plots respectivement supérieurs 134 et inférieurs 136. Ces plots sont avantageusement réalisés en un matériau de friction, de type FERRODO.

La figure 5 illustre une position de repos de l'appareil, correspondant à l'absence de force de pressage, comme explicité ci-dessus en référence à la figure 3. Dans cette configuration, l'axe moteur 144 et le coulisseau 160 tournent librement dans le logement 128, ménagé dans l'arbre creux 122. De plus, le ressort 146 repousse le coulisseau 160 en direction du sommet 124 de l'arbre 122.

Ceci entraîne donc une mise en butée, contre la plaque fixe 140, des plots supérieurs 134 portés par la collerette 132 solidaire de l'arbre 122. Par conséquent, l'arbre 122 est solidaire du bâti, de sorte qu'il n'est pas mis en rotation et n'entraîne pas non plus l'ogive, qui reste immobile.

Si une force de pressage F est exercée (voir figure 6), cette dernière tend à repousser l'arbre 122 et le coulisseau 160 vers le bas, à savoir en direction de l'axe 144. Ce mouvement descendant se poursuit, jusqu'à ce que les plots inférieurs 136 viennent en butée contre le plateau tournant 152. Dans ces conditions, l'arbre creux 122 est mis en mouvement par l'arbre, de sorte qu'il contribue à entraîner l'ogive et à presser l'agrume.

Enfin, lorsque la force précitée n'est plus exercée, le ressort 146 repousse le coulisseau 160 le long de l'axe 144. Ce coulisseau 160 déplace alors en translation l'arbre, jusqu'à ce que les plots supérieurs 134 viennent au contact de la plaque fixe 140. Ceci induit un freinage puis un arrêt de l'arbre d'entraînement, ainsi que de l'ogive.

L'invention permet d'atteindre les objectifs précédemment mentionnés.

On notera tout d'abord que l'appareil de traitement alimentaire conforme à l'invention assure une sécurité satisfaisante pour l'opérateur. En effet, l'outil actif, tel que l'ogive de pressage ou la râpe de déchiquetage, n'est pas entraîné en rotation durant les phases de mise en place de l'aliment, ainsi qu'éventuellement de retrait de la peau dans le cas des agrumes. Cet arrêt en rotation est observé, même lorsque l'axe moteur tournant est mis en mouvement.

Ceci évite par conséquent tout danger, tout en limitant la possibilité d'éclaboussures. De plus, cette possibilité de débrayage autorise une moindre sollicitation du moteur, dans la mesure où elle permet de s'affranchir des arrêts et des démarrages successifs, impliqués par certaines solutions de l'art antérieur.

De plus, la présente invention offre des avantages spécifiques, par rapport à la mise en oeuvre du dispositif N° 10 commercialisé par la Demanderesse. En effet, l'invention tire parti d'une liaison de type « alésage tournant », grâce à l'utilisation d'un arbre creux dans lequel pénètre directement l'axe moteur. Cette solution est à comparer avec celle de type « arbre tournant » utilisée par le dispositif N°10.

Par conséquent, la présente invention est avantageuse par rapport à ce dispositif antérieur N° 10, en termes d'étanchéité. En effet la solution à alésage tournant, conforme à l'invention, permet de loger l'axe moteur pour partie à l'intérieur de l'arbre d'entraînement, ce qui limite très sensiblement la mise en contact avec du jus de fruits, on encore des agents de nettoyage. On conçoit donc que l'appareil de traitement alimentaire conforme à l'invention présente une durée de vie substantiellement allongée, notamment dans la mesure où ses différents éléments constitutifs sont soumis à des conditions de fonctionnement bien moins agressives.

De plus, grâce à l'invention, la liaison pivot est réalisée entre l'arbre d'entraînement et l'axe moteur, et non pas par rapport à une pièce fixe telle que le bâti ou le socle, comme dans la solution antérieure du dispositif N° 10. Il existe donc une coaxialité « naturelle » entre cet arbre et cet axe, ce qui permet d'éviter les déports latéraux.

L'invention offre une étanchéité satisfaisante, du fait même de l'utilisation d'un arbre creux dans lequel pénètre l'axe moteur. Par conséquent, il n'y a besoin d'aucun joint d'étanchéité supplémentaire, puisque l'invention garantit une étanchéité naturelle par gravité. A cet égard, on notera que l'invention permet en outre une réduction du nombre d'éléments constitutifs de l'appareil de traitement.

Pour la rotation de l'outil actif, tel que l'ogive, l'arbre d'entrainement est associé à un mouvement nécessitant un guidage, de type liaison pivot. De plus, pour la mise en oeuvre de l'embrayage, cet arbre d'entraînement doit également être associé à un mouvement de translation correspondant à la course d'embrayage, nécessitant une liaison glissière.

Dans le premier mode de réalisation, correspondant aux figures 3 et 4, ces deux liaisons sont combinées. En revanche, dans le mode de réalisation des figures 5 et 6, ces deux liaisons sont distinctes, grâce à l'utilisation d'un organe intermédiaire de type coulisseau. Cette seconde solution présente des avantages spécifiques, notamment en ce qu'elle permet d'allonger la durée de vie du mécanisme, par diminution de l'usure.

L'invention n'est pas limitée aux exemples décrits et représentés.

On a vu ci-dessus que, dans la position de repos de l'arbre d'entraînement, l'axe rotatif moteur est mis en mouvement directement à l'intérieur du logement ménagé dans cet arbre. La friction ainsi générée peut être traitée par tout moyen approprié, à savoir de manière directe comme dans le mode de réalisation des figures 3 et 4, ou bien encore par des roulements à billes comme dans le mode de réalisation des figures 5 et 6. On peut également prévoir d'utiliser des coussinets, ou encore tout autre organe mécanique adapté.

Dans les exemples décrits et représentés, la liaison entre l'arbre d'entraînement et l'ogive est amovible. On peut également prévoir de réaliser un arbre d'entraînement formé d'un seul tenant avec cette ogive. On peut également intercaler, entre cet arbre d'entraînement et cette ogive, au moins une pièce intermédiaire.

Dans l'exemple des figures 5 et 6, la liaison glissière entre le coulisseau et l'axe moteur est assurée par des méplats. On peut cependant prévoir d'utiliser d'autres moyens afin d'empêcher la rotation mutuelle de ces deux éléments, tels qu'une goupille, une rainure de clavette ou analogue.

Dans les exemples représentés, l'arbre d'entraînement est prolongé par une collerette qui supporte les éléments de friction, à savoir les rebords ou les plots. Cependant, ces éléments de friction peuvent être directement intégrés à l'arbre d'entraînement. Les modes de réalisation faisant appel à une collerette présentent cependant des avantages spécifiques, dans la mesure où ils assurent une plus grande facilité d'adhérence et de montage du matériau de friction, et qu'ils permettent une protection efficace de ce matériau de friction à l'égard du ruissellement.

Enfin, comme vu ci-dessus, l'invention trouve son application à d'autres appareils de traitement alimentaire qu'un presse-agrumes. Il peut s'agir d'un appareil permettant de presser des fruits d'un autre type, par l'intermédiaire d'un outil actif différent d'une ogive. On peut également prévoir d'utiliser un appareil de traitement de type centrifugeuse. Dans ce dernier cas, l'arbre d'entraînement supporte l'ensemble formé par le panier de cette centrifugeuse, et son outil de déchiquetage, tel que représenté par exemple sur la figure 2 de FR-A-2 830 180.

## Revendications

1. Appareil de traitement alimentaire, en particulier presse-agrumes ou centrifugeuse, comprenant un bâti (2), des moyens moteurs pourvus d'un axe moteur rotatif (44 ; 144), un outil actif de traitement, en particulier une ogive de pressage (4) du presse-agrumes ou une râpe de déchiquetage de la centrifugeuse, cet appareil comprenant en outre un arbre d'entraînement (22 ; 122) propre à être mis en mouvement par l'axe moteur de façon à entraîner l'outil actif, cet arbre d'entraînement possédant une position de repos et une position active, dans laquelle il est mis en mouvement, cet arbre d'entraînement étant propre à passer de sa position de repos vers sa position active sous l'effet d'une force (F) exercée par l'utilisateur, alors qu'il est prévu des moyens de rappel (46 ; 146) de cet arbre d'entraînement vers sa position de repos, **caractérisé en ce que** cet arbre d'entraînement (22 ; 122) est un arbre creux qui définit un logement (28 ; 128) recevant au moins en partie l'axe rotatif (44 ; 144), cet axe rotatif étant propre à tourner librement dans ce logement dans la position de repos de l'arbre d'entraînement.

2. Appareil selon la revendication 1, **caractérisé en ce que** le logement (28 ; 128) est borgne au niveau d'un sommet (24 ; 124) de l'arbre d'entraînement, en étant débouchant à l'opposé de ce sommet.

3. Appareil selon la revendication précédente, **caractérisé en ce que** le rapport (h/d) entre la hauteur (h) du logement (28 ; 128) et la dimension transversale, notamment le diamètre (d), de l'axe moteur (44 ; 144) est compris entre 1 et 10, de préférence entre 4 et 8, en particulier voisin de 6, cette hauteur étant calculée en référence au débouché du logement et cette dimension transversale étant calculée dans la région de l'axe située au voisinage de ce débouché.

4. Appareil selon l'une quelconque des revendications précédentes, **caractérisé en ce que** l'arbre d'entraînement (22 ; 122) est prolongé par une collerette (32 ; 132) qui est pourvue de premiers (34 ; 134) et seconds (36 ; 136) éléments de friction, propres à coopérer respectivement avec un premier organe complémentaire (40 ; 140) solidaire du bâti et avec un second organe complémentaire (52 ; 152) solidaire des moyens moteurs.

5. Appareil selon l'une quelconque des revendications précédentes, **caractérisé en ce que** les parois périphériques de l'axe moteur (44) s'étendent directement au voisinage des parois en regard du logement (28), sans interposition d'une pièce intermédiaire entre cet axe et l'arbre d'entraînement (22).

6. Appareil selon la revendication précédente, **caractérisé en ce que** l'axe rotatif moteur (44) présente une cavité (45), adjacente au sommet (24) de l'arbre d'entraînement (22), les moyens de rappel comprenant un ressort (46) logé dans cette cavité.

7. Appareil selon des revendications 1 à 4, **caractérisé en ce qu'**un élément intermédiaire (160) est interposé entre les parois en regard de l'axe rotatif (144) et de l'arbre d'entraînement (122), cet élément intermédiaire présentant un degré de liberté en translation par rapport à l'axe rotatif (144) dans ladite position de repos, selon la direction principale de ce dernier, tout en étant lié en rotation par rapport à ce dernier, cet élément intermédiaire (160) présentant en outre un degré de liberté en rotation par rapport à l'arbre d'entraînement (122) dans ladite position de repos, selon la direction principale de ce dernier, tout en étant lié en translation à ce dernier.

8. Appareil selon la revendication précédente, **caractérisé en ce que** des éléments de roulement, notamment de type roulement à billes (162, 164), à rouleaux ou à aiguilles, sont interposés entre les parois en regard de l'arbre d'entraînement (122) et de l'organe intermédiaire (160).

9. Appareil selon la revendication 7 ou 8, **caractérisé en ce que** les moyens de rappel comprennent un ressort hélicoïdal (146) interposé entre les parois en regard de l'organe intermédiaire (160) et des moyens moteurs.

## Claims

1. Food processor, particularly citrus press or juicer, comprising a base unit (2), drive means provided with a rotary motor spindle (44; 144), an active processing implement, particularly a juice-extracting cone (4) of the citrus press or a shredding grater of the juicer, this processor further comprising a driveshaft (22; 122) able to be set in motion by the motor spindle so as to drive the active implement, this driveshaft having a rest position and an active position in which it is set in motion, this driveshaft being able to move from its rest position to its active position under the effect of a force (F) applied by the user, whereas return means (46; 146) are provided for returning this driveshaft to its rest position, **characterized in that** this driveshaft (22; 122) is a hollow shaft which defines a housing (28; 128) at least partially accommodating the rotary spindle (44; 144), this rotary spindle being able to rotate freely in this housing when the driveshaft is in the rest position.

2. Processor according to Claim 1, **characterized in that** the housing (28; 128) is blind at a top (24; 124) of the driveshaft, being open at the opposite end to this top.

3. Processor according to Claim 2, **characterized in that** the ratio (h/d) between the height (h) of the housing (28; 128) and the transverse dimension, particularly the diameter (d) of the motor spindle (44; 144) is comprised between 1 and 10, preferably between 4 and 8, and in particular is close to 6, this height being calculated with respect to the opening of the housing and this transverse dimension being calculated in the region of the spindle that is situated in the vicinity of this opening.

4. Processor according to anyone of the preceding claims, **characterized in that** the driveshaft (22; 122) is extended by a flange (32; 132) which is provided with first (34; 134) and second (36; 136) friction elements able respectively to collaborate with a first complementary member (40; 140) secured to the base unit and with a second complementary member (52; 152) secured to the drive means.

5. Processor according to anyone of the preceding claims, **characterized in that** the peripheral walls of the motor spindle (44) extend directly into the vicinity of the facing walls of the housing (28) without the interposition of any intermediate component between this spindle and the driveshaft (22).

6. Processor according to Claim 5, wherein the rotary motor spindle (44) has a cavity (45) adjacent to the top (24) of the driveshaft (22), the return means comprising a spring (46) housed in this cavity.

7. Processor according to anyone of Claims 1 to 4, **characterized in that** an intermediate element (160) is interposed between the facing walls of the rotary spindle (144) and of the driveshaft (122), this intermediate element having a degree of freedom in translational movement with respect to the rotary spindle (144) in said rest position, in the main direction of this spindle, while at the same time being forced to rotate as one with the latter, this intermediate element (160) further having a degree of freedom to rotate with respect to the driveshaft (122) in said rest position, in the main direction of this shaft, while at the same time being forced to move as one with the latter in terms of translational movement.

8. Processor according to Claim 7, wherein antifriction elements, particularly of the ball bearing (162, 164), roller bearing or needle bearing type are interposed between the facing walls of the driveshaft (122) and of the intermediate member (160).

9. Processor according to Claim 7 or claim 8, wherein the return means comprise a helical spring (146) interposed between the facing walls of the intermediate member (160) and of the drive means.

## Patentansprüche

1. Gerät zur Lebensmittelverarbeitung, insbesondere eine Zitruspresse oder Zentrifuge, die einen Aufbau (2), Antriebsmittel, die mit einer drehenden Antriebsachse (44; 144) versehen sind, ein aktives Verarbeitungswerkzeug, insbesondere ein Pressspitzkegel (4) der Zitruspresse oder eine Zerreißreibe der Zentrifuge aufweist, wobei dieses Gerät ferner eine Antriebswelle (22; 122) aufweist, die von der Antriebsachse derart in Bewegung versetzt werden kann, dass sie das aktive Werkzeug antreibt, wobei die Antriebswelle eine Ruhestellung und eine aktive Stellung aufweist, in der sie in Bewegung versetzt wird, wobei diese Antriebswelle von ihrer Ruhestellung zu ihrer aktiven Stellung unter der Einwirkung einer Kraft (F), die vom Benutzer ausgeübt wird, übergehen kann, während Rückholmittel (46; 146) dieser Antriebswelle zu ihrer Ruhestellung vorgesehen sind, **dadurch gekennzeichnet, dass** diese Antriebswelle (22; 122) eine Hohlwelle ist, die eine Aufnahme (28; 128) aufweist, die die Drehachse (44; 144) zumindest teilweise aufnimmt, wobei diese Drehachse frei in dieser Aufnahme in der Ruhestellung der Antriebswelle drehen kann.

2. Gerät nach Anspruch 1, **dadurch gekennzeichnet, dass** die Aufnahme (28; 128) auf dem Niveau eines Scheitels (24; 124) der Antriebswelle verschlossen ist und auf der entgegen gesetzten Seite dieses Scheitels mündend ist.

3. Gerät nach dem vorhergehenden Anspruch, **dadurch gekennzeichnet, dass** das Verhältnis (h/d) zwischen der Höhe (h) der Aufnahme (28; 128) und dem Quermaß, insbesondere der Durchmesser (d) der Antriebsachse (44; 144) zwischen 1 und 10 liegt, vorzugsweise zwischen 4 und 8, insbesondere in der Nähe von 6, wobei diese Höhe in Bezug auf das Münden der Aufnahme berechnet wird und dieses Quermaß in dem Bereich der Achse in der Nähe dieses Mündens berechnet wird.

4. Gerät nach einem der vorhergehenden Ansprüche, **dadurch gekennzeichnet, dass** sich die Antriebswelle (22; 122) durch einen Kragen (32; 132) verlängert, der mit ersten (34; 134) und zweiten (36; 136) Reibungselementen versehen ist, die jeweils mit einem ersten ergänzenden Organ (40; 140), das fest mit dem Aufbau verbunden ist, und mit einem zweiten ergänzenden Organ (52; 152), das mit den Antriebsmitteln fest verbunden ist, zusammenwirken können.

5. Gerät nach einem der vorhergehenden Ansprüche, **dadurch gekennzeichnet, dass** sich die umfänglichen Wände der Antriebsachse (44) direkt in der Nähe der Wände gegenüber der Aufnahme (28), ohne Einfügen eines Zwischenteils zwischen dieser Achse und die Antriebswelle (22) erstrecken.

6. Gerät nach dem vorhergehenden Anspruch, **dadurch gekennzeichnet, dass** die drehende Antriebsachse (44) einen Hohlraum (45) neben dem Scheitel (24) der Antriebswelle (22) aufweist, wobei die Rückholmittel eine Feder (46) aufweisen, die in diesem Hohlraum untergebracht ist.

7. Gerät nach den Ansprüchen 1 bis 4, **dadurch gekennzeichnet, dass** ein Zwischenelement (160) zwischen die Wände gegenüber der Drehachse (144) und der Antriebswelle (122) eingefügt ist, wobei dieses Zwischenelement einen Freiheitsgrad in Verschiebung in Bezug zu der Drehachse (144) in der Ruhestellung entlang der Hauptrichtung dieser Letzteren aufweist und gleichzeitig in Drehung in Bezug zu dieser Letzteren verbunden ist, wobei dieses Zwischenelement (160) ferner einen Freiheitsgrad in Drehung in Bezug zu der Antriebswelle (122) in der Ruhestellung in die Hauptrichtung dieser Letzteren aufweist und gleichzeitig in Verschiebung mit dieser Letzteren verbunden ist.

8. Gerät nach dem vorhergehenden Anspruch, **dadurch gekennzeichnet, dass** Lagerelemente, insbesondere des Typs Kugellager (162, 164) mit Walzen oder Nadeln zwischen die Wände gegenüber der Antriebswelle (122) und dem Zwischenelement (160) eingefügt sind.

9. Gerät nach Anspruch 7 oder 8, **dadurch gekennzeichnet, dass** die Rückholmittel eine Spiralfeder (146) aufweisen, die zwischen die Wände gegenüber dem Zwischenelement (160) und den Antriebsmitteln eingefügt ist.
